# EUROPÄISCHE PATENTSCHRIFT

(11) **EP 1 607 314 B1**
(45) Veröffentlichungstag und Bekanntmachung des Hinweises auf die Patenterteilung: **19.09.2007**
(21) Anmeldenummer: 05012602.8
(22) Anmeldetag: 11.06.2005
(51) Int. Cl.: B62D 47/02, B62D 31/02

(54) **Zweigliedriger Gelenkomnibus**
Articulated omnibus with two members
Autobus articulé à deux membres

(30) Priorität: 18.06.2004 DE 102004029461
(43) Veröffentlichungstag der Anmeldung: 21.12.2005
(73) Patentinhaber: DaimlerChrysler AG, 70327 Stuttgart (DE)
(72) Erfinder: Becker, Michael, 55270 Ober-Olm (DE); Prokopp, Wolfgang, 71120 Grafenau (DE)

(56) Entgegenhaltungen:
- EP-A- 0 700 822
- CH-A- 298 011
- DE-A1- 2 835 865
- DE-A1- 2 934 314
- DE-B- 1 288 457
- FR-A- 2 826 332
- GB-A- 2 134 864

## Beschreibung

Die Erfindung betrifft einen zweigliedrigen Gelenkomnibus der im Oberbegriff des Anspruchs 1 angegebenen Art.

Derartige Gelenkomnibusse in Niederflurbauweise mit nur einem Drehgelenk sind z. B. aus dem öffentlichen Personennahverkehr von mehreren Fahrzeugherstellern bekannt und weisen den ehemaligen gesetzlichen Bestimmungen in Deutschland entsprechend eine Gesamtlänge von maximal 18 m auf. Eine Baureihe dieser Gelenkbusse ist z. B. der Mercedes-Benz "Citaro G". Je nach Bestuhlungsanordnung bieten diese Gelenkbusse Platz für bis zu 168 Personen bei einem zulässigen Gesamtgewicht von 28 Tonnen.

Aufgrund neuerer europäischer Vorschriften dürfen Gelenkbusse mit einem Drehgelenk zwischenzeitlich eine Gesamtlänge von bis zu 18,75 m aufweisen. Der erste Gelenkbus dieser Gesamtlänge war der "Centroliner" von Neoplan, der im Jahre 2002 auf der IAA gezeigt wurde. Wesentlicher Vorteil dieses verlängerten Gelenkbusses ist die um 4-6 Sitzplätze erhöhte Sitzkapazität. Aufgrund der zulässigen Achslasten sowie des tatsächlichen Fahrzeuggesamtgewichtes ist bei diesem Gelenkbus von Neoplan jedoch keine Erhöhung der Gesamtfahrgastkapazität gegenüber einem 18 m Gelenkzug wie dem Citaro G" gegeben.

Der Bedarf an Fahrzeugen zur Beförderung größerer Fahrgastzahlen besteht jedoch, wobei einige Bushersteller zur Erhöhung der Fahrgastkapazität auf Doppelgelenkbusse, also Gelenkbusse mit zwei Drehgelenken, einem Vorderwagen, einem Mittelwagen und einem Hinterwagen setzen. Als längster Niederflurbus der Welt wurde z. B. der Doppelgelenkbus "AGG 300" von der belgischen Firma Van Hool im Jahre 2003 gebaut und vom 19. Januar bis zum 12. März 2004 auf der MetroBus-Linie 5 im Straßenverkehr von Hamburg eingesetzt. Dieser Doppelgelenkomnibus weist bei einer Gesamtlänge von 24,78 m eine Fahrgastkapazität von insgesamt 183 Personen und ein zulässiges Gesamtgewicht von 35.820 kg auf. Um den vorgeschriebenen Kreis zur Überprüfung der Kurvenlaufeigenschaften von 25 m einhalten zu können, weist der bekannte Doppelgelenkbus bei insgesamt vier Radachsen drei gelenkte, einzelbereifte Achsen auf. Durch die zwei Drehgelenke und die drei gelenkten Achsen ist der Doppelgelenkbus jedoch insgesamt technisch aufwendig und weist ein entsprechend hohes Eigengewicht auf. Auch lässt sich das Antriebsaggregat nicht ohne Probleme im Hinterwagen anordnen, um die bei üblichen Gelenkbussen mit einem einzigen Drehgelenk bewährte Schubtechnik einsetzen zu können.

Aus der DE 83 03 097 U1 ist ferner ein Gelenkomnibus bekannt, der eines oder mehrere Drehgelenke aufweisen und somit zweigliedrig oder auch dreigliedrig ausgebildet sein kann. Der durch das Gewicht des im Heck untergebrachten Antriebsaggregates belastete Hinterwagen weist dabei jeweils eine Tandemachse auf. Durch diese Tandemachse soll die gleiche Tragfähigkeit erreicht werden wie bei einer schleppgelenkten Achse mit Zwillingsreifen. Für höhere Anforderungen an die Transportkapazität von Fahrgästen sind jedoch die dreigliedrigen Versionen des Gelenkomnibus vorgesehen.

Aus der DE 1 288 457 A ist ein eingliedriger Stadtomnibus ohne Drehgelenk bekannt, der eine Hinterachsanordnung mit einer einzigen Antriebsachse sowie eine Vorderachsanordnung mit zwei gelenkten Radachsen aufweist. Im Bereich der seitlichen Räder der Radachsen sind jeweils zugehörige seitliche Radhäuser vorgesehen, die vom Fußboden aus erhaben in den Innenraum hineinragen. Zur besseren Raumausnutzung ist zwischen den seitlichen Radhäusern der beiden vorderen Radachsen und der Karosserieseitenwand jeweils ein Sitzplatz angeordnet, wobei die beiden entgegensetzt angeordneten Sitzplätze vom Mittelgang des Busses aus über einen Durchgang zugänglich sind, der als gemeinsamer Fußraumbereich der Sitze nutzbar ist.

Trotz dieser Anordnung der Sitzplätze geht durch die gegenüber der Karosserieseitenwand nach innen versetzte Anordnung der Radhäuser verhältnismäßig viel Raum für den Personentransport verloren.

Aus der CH 298 011 A ist ein zweigliedriger Gelenkbus mit einem zweiachsigen Vorderwagen bekannt, der über ein Drehgelenk mit einem Hinterwagen verbunden ist. Der Hinterwagen weist eine einzige Achse auf und trägt einen Motor, der über einen Antriebsstrang mit der angetriebenen Hinterachse des Vorderwagens verbunden ist.

Aufgrund dieser Bauweise weist der Hinterwagen nur eine relativ geringe Transportkapazität für den Personentransport auf.

Aus der EP 0 700 822 A2 ist ein zweigliedriger Gelenkbus mit einem zweiachsigen Vorderwagen bekannt, der über ein Drehgelenk mit einem einachsigen Hinterwagen verbunden ist. Die Hinterachse des Vorderwagens und die einzige Achse des Hinterwagens sind jeweils mit Doppelbereifung versehen und über elektrische Radnabenmotoren angetrieben.

Schließlich ist aus der GB 2 134 864 A ein zweigliedriger Gelenkbus gemäß dem Oberbegriff des geltenden Anspruchs 1 bekannt, der einen Vorderwagen sowie einen über ein Drehgelenk mit dem Vorderwagen verbundenen Hinterwagen umfasst. Der Vorderwagen weist eine gelenkte Vorderachse sowie eine angetriebene Hinterachse auf, die über einen Antriebsstrang mit dem im Heck des Hinterwagens angeordneten Motor verbunden ist. Der Hinterwagen umfasst zwei in einem Abstand hintereinander angeordnete Radachsen, die eine gelenkte Tandemachse bilden. Der in Niederflurbauweise ausgeführte Gelenkbus bildet im Bereich der Radachsen jeweils zugehörige seitliche Radhäuser, die vom Fußboden aus erhaben in den Innenraum hineinragen.

Die gelenkte Tandemachse des Hinterwagens ermöglicht einen verhältnismäßig kleinen Wendekreis des Gelenkbusses. Allerdings ist die Tragfähigkeit der gelenkten Tandemachse begrenzt, so dass der Hinterwagen zur Vergrößerung der Transportkapazität nicht ohne weiteres verlängert werden kann. Für höhere Anforderungen an die Transportkapazität sind daher dreigliedrige Versionen des Gelenkbusses vorgesehen.

Des Weiteren ist bei dem bekannten Gelenkbus von Nachteil, dass der Antriebsstrang zwischen dem im Heck des Hinterwagens angeordneten Motor und der Hinterachse des Vorderwagens verläuft, somit eine sehr aufwändige Bauweise aufweist und einen verhältnismäßig großen Bauraum beansprucht, welcher für den Personentransport verloren geht.

Der Erfindung liegt die Aufgabe zugrunde, einen Gelenkbus der im Oberbegriff des Anspruchs 1 angegebenen Art dahingehend weiterzuentwickeln, dass die Kapazität des Gelenkbusses für den Personentransport bei Verlängerung des Gelenkbusses auf eine für zweigliedrige Gelenkbusse zulässige Gesamtlänge deutlich erhöht werden kann.

Diese Aufgabe wird durch die Merkmale des Anspruchs 1 gelöst. Vorteilhafte Ausgestaltungen der Erfindung sind den übrigen Ansprüchen zu entnehmen.

Die Erfindung beruht auf dem allgemeinen Gedanken, dass durch die in den Innenraum hineinragenden Radhäuser kein für den Personentransport nutzbarer Raum verloren gehen soll. Dies gelingt, wenn der Platz oberhalb der relativ ausladenden seitlichen Radhäuser vollständig für Sitzplätze genutzt werden kann. Dies ist bei den üblichen Radhausabmessungen von Gelenkbussen mit sogenannten Visavis-Sitzen an sich bekannter Art möglich.

Dabei ist die vordere Radachse des Hinterwagens angetrieben und zur Aufnahme hoher Radlasten als Doppelbereifung oder Supersinglebereifung ausgebildet. Demgegenüber ist die hintere Radachse als Lenkachse ausgebildet, die vorteilhaft lediglich mit einer Einfachbereifung versehen ist. Der Platzbedarf für die Räder mit Einfachbereifung stimmt dabei aufgrund des notwendigen Freiraumes für den Lenkeinschlag weitgehend mit dem Platzbedarf der Doppelbereifung überein, wodurch die Radhäuser der Radachsen des Hinterwagens die gleiche Größe aufweisen können.

Wird anstelle der Zwillingsbereifung die Supersinglebereifung vorgesehen, die für ähnlich hohe Radlasten geeignet ist, wie die Zwillingsbereifung aber nur eine Einzelbereifung mit breiterem Laufstreifen darstellt, können die Radhäuser daran angepasst entsprechend schmaler gestaltet werden. Dies kann insbesondere der Durchgangsbreite im Innenraum zugute kommen, wenn anstelle der Visavis-Doppelsitze nicht gezeigte Visavis-Einzelsitze auf dem schmaleren Radhaus angeordnet werden.

Aus Gründen der Fahrstabilität ist es insbesondere bei im Hinterwagen angeordnetem Antriebsaggregat vorteilhaft, wenn die beiden Radachsen des Hinterwagens in dessen Mittelbereich angeordnet sind.

Erfolgt die Abstimmung der Visavis-Sitze auf die Radhäuser so, dass die Sitzkissenvorderkanten der Visavis-Sitze jeweils etwa lotrecht oberhalb des zugeordneten Radhausendes liegen, ist die Bauraumausnutzung besonders gut und nicht mit störenden Komforteinbußen für die Insassen der Visavis-Sitze verbunden.

Nachfolgend ist ein Ausführungsbeispiel der Erfindung anhand einer zeichnerischen Darstellung näher erläutert.

Dabei zeigen:
- Fig. 1: eine Seitenansicht eines Gelenkomnibusses,
- Fig. 2: eine Draufsicht auf den Innenraum des Gelenkomnibusses,
- Fig. 3: einen Doppelachsbereich eines Hinterwagens des Gelenkomnibusses in Seitenansicht und
- Fig. 4: eine Unteransicht des Doppelachsbereiches gemäß Fig. 3.

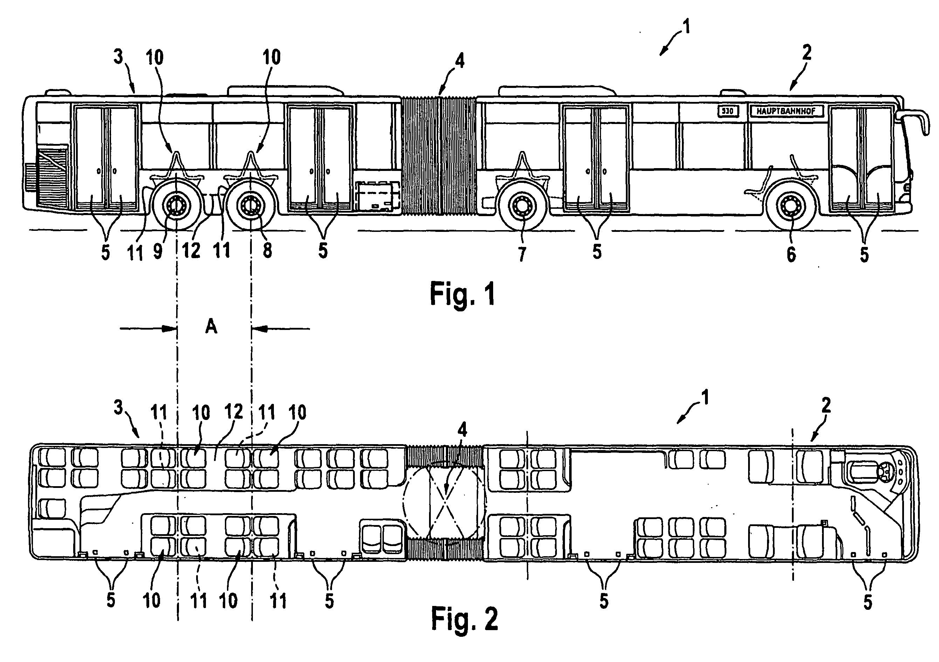

Ein zweigliedriger Gelenkomnibus 1, der in den Fig. 1 und 2 über seine gesamte Länge gezeigt ist, umfasst einen Vorderwagen 2 und einen Hinterwagen 3, die über ein angedeutetes Drehgelenk 4 üblicher Bauart miteinander verbunden sind. Der insgesamt eine Länge von 18,75 m aufweisende Gelenkomnibus 1 wird von einem Antriebsaggregat angetrieben, das im Heckbereich des Hinterwagens 3 angeordnet ist, und gehört somit zu den Schubgelenkomnibussen. Anstelle der hier vorgesehenen Gesamtlänge von 18,75 m könnte der Gelenkomnibus 1 auch eine größere Länge aufweisen, soweit hierfür z. B. durch Ausnahmegenehmigung eine Zulassung für den Straßenverkehr zu erhalten ist.

Der großzügige Innenraum des Gelenkomnibusses 1 in Niederflurbauweise ist durch mehrere Innenschwingtüren 5 mit jeweils zwei Flügeln zugänglich und beidseitig mit Sitzreihen sowie den notwendigen Freiflächen für Stehplätze, Rollstühle, Kinderwagen oder dgl. versehen. Es versteht sich, dass anstelle der Innenschwingtüren 5 auch Außenschwingtüren oder andere Omnibustüren bekannter Bauart vorgesehen sein könnten. Insgesamt weist der Gelenkomnibus 1 vier Radachsen 6, 7, 8 und 9 auf. Die Radachsen 6 und 7 bilden die Vorderachse und Hinterachse des Vorderwagens 2, während die Radachsen 8 und 9 eine Doppelachsanordnung des Hinterwagens 3 bilden und im Mittelbereich des Hinterwagens 3 angeordnet sind. Alle Radachsen sind mit Omnibusrädern gleichen Durchmessers versehen.

Um eine gute Bauraumausnutzung im Innenraum des Gelenkbusses 1 zu ermöglichen, ist der Achsabstand A der beiden Radachsen 8 und 9 exakt auf den Abstand zwischen den Mittelebenen von zwei Visavis-Sitzen 10 abgestimmt, die spiegelbildlich auf beiden Seiten des Innenraumes in einem Abstand hintereinander angeordnet sind.

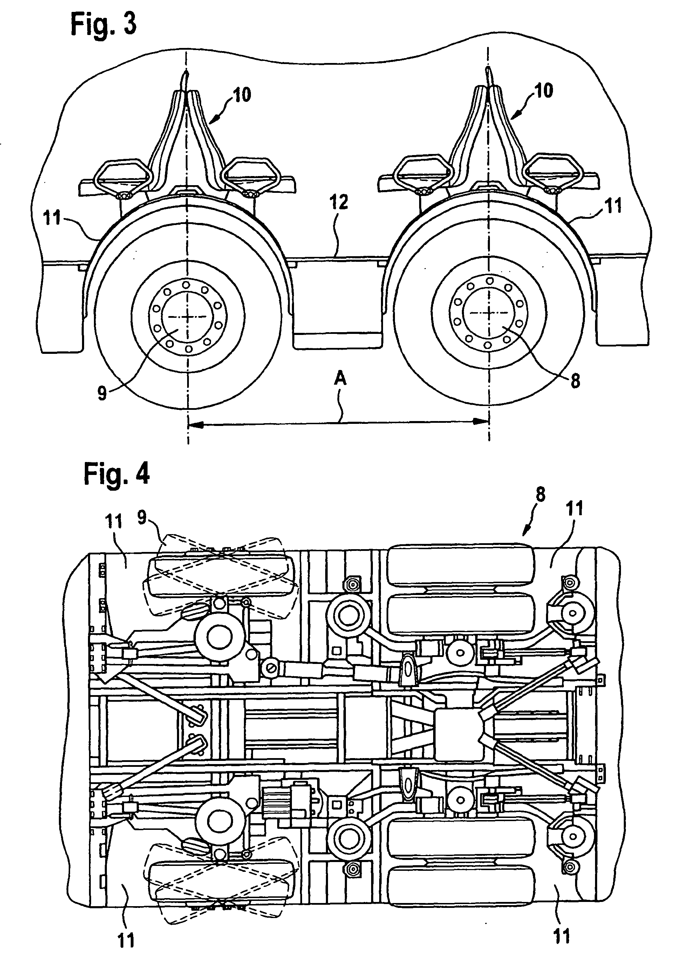

Wie in Verbindung mit Fig. 3 deutlicher zu erkennen ist, umfasst jeder der Visavis-Sitze 10 auf beiden Innenraumseiten insgesamt vier Sitzplätze, bestehend aus zwei Doppelsitzen bzw. Sitzpaaren mit Sitzkissen- und Sitzlehnenteil, deren jeweils nach hinten geneigten Sitzlehnenteile im oberen, Bereich miteinander verbunden sind. Dadurch nehmen die Insassen auf den miteinander verbundenen Sitzpaaren eine entgegengesetzte Sitzposition ein und blicken folglich in entgegengesetzte Richtungen. Dabei ergibt sich eine Erstreckung der Visavis-Sitze 10 von Sitzkissenvorderkante zu Sitzkissenvorderkante, die exakt mit der Länge eines vom Visavis-Sitz 10 überdeckten Radhauses 11 für die Räder der Radachse 8 bzw. 9 übereinstimmt. Zwischen den beiden benachbarten, etwa halbkreisförmigen Radhäusern 11 der gleichen Fahrzeugseite verbleibt lediglich ein kurzer, ebener Bodenbereich 12, der als gemeinsamer Fußraum für die einander zugewandten Insassen der benachbarten Visavis-Sitze 10 dient.
Da diese Anordnung bei allen vier Radhäusern 11 der Radachsen 8 und 9 gegeben ist, geht durch die aus dem Fußboden herausstehenden Radhäuser 11 kein Platz verloren, sondern der Platz wird vollständig für ohnehin vorzusehende Sitzplätze genutzt.

Im Zusammenhang mit der Unteransicht nach Fig. 4 lässt sich erkennen, dass die vordere Radachse 8 der Doppelachsanordnung zwillingsbereift ist, wodurch sie eine entsprechend höhere Achslast aufnehmen kann.
Die hintere Radachse 9 des Hinterwagens 3 ist demgegenüber gelenkt ausgebildet und ist daher nur einfach bereift. Der Freiraum im Radhaus 11 bietet damit bei übereinstimmender Größe mit dem Radhaus 11 der Radachse 8 ausreichend Platz für die erforderlichen Lenkeinschläge.

Unter Anpassung an die Tragfähigkeit des Hinterwagens 3 wird der Vorderwagen 2 des Gelenkomnibusses 1 zweckmäßig eine einfach bereifte Vorderachse 6 und eine doppelt bereifte Hinterachse 7 aufweisen.

## Patentansprüche

1. Zweigliedriger Gelenkomnibus (1), dessen mindestens zwei Radachsen (6, 7) aufweisender Vorderwagen (2) über das Drehgelenk (4) mit dem eine Radachsenanordnung aufweisenden Hinterwagen (3) verbunden ist, wobei die Radachsenanordnung des Hinterwagens (3) zwei in einem Abstand hintereinander angeordnete Radachsen (8, 9) umfasst, wobei der Gelenkomnibus (1) als Niederflurbus ausgebildet und mit seitlichen Sitzen (10) ausgestattet ist und wobei die Radhäuser (11) der Omnibusräder erhaben vom Fußboden in den Innenraum des Gelenkomnibusses (1) hineinragen,
**dadurch gekennzeichnet,**
**dass** die vordere Radachse (8) des Hinterwagens (3) angetrieben und mit einer Doppelbereifung oder einer Supersinglebereifung versehen ist und die hintere Radachse (9) des Hinterwagens (3) gelenkt ist, wobei zwischen den seitlichen Radhäusern (11) der beiden Radachsen (8 und 9) des Hinterwagens (3) jeweils ein Fußbodenbereich (12) liegt, der als gemeinsamer Fußraumbereich für auf den Radhäusern (11) entgegengesetzt angeordnete Sitze oder Doppelsitze (Visavis-Sitze 10) nutzbar ist.

2. Zweigliedriger Gelenkomnibus nach Anspruch 1,
**dadurch gekennzeichnet,**
**dass** die beiden Radachsen (8 und 9) in einem mittleren Längenbereich des Hinterwagens (3) angeordnet sind.

3. Zweigliedriger Gelenkomnibus nach Anspruch 1,
**dadurch gekennzeichnet,**
**dass** die Sitzkissenvorderkanten der Visavis-Sitze (10) jeweils nahezu senkrecht oberhalb des an das zugeordnete Radhaus (11) angrenzenden Endes des Fußbodenbereichs (12) liegen.

## Claims

1. Two-membered articulated omnibus (1), of which the front carriage (2) having at least two wheel axles (6, 7) is connected via the rotary joint (4) to the rear carriage (3) having a wheel-axle arrangement, the wheel-axle arrangement of the rear carriage (3) comprising two wheel axles (8, 9) arranged at a distance one behind the other, the articulated omnibus (1) being designed as a low-platform bus and being equipped with lateral seats (10), and the wheel houses (11) of the omnibus wheels projecting, raised from the floor, into the interior of the articulated omnibus (1), **characterized in that** the front wheel axle (8) of the rear carriage (3) is driven and is provided with double tyres or with a super single tyre, and the rear wheel axle (9) of the rear carriage (3) is steered, there lying in each case between the lateral wheel houses (11) of the two wheel axles (8 and 9) of the rear carriage (3) a floor region (12) which can be used as a joint foot-space region for seats or double seats (mutually facing seats 10) arranged opposite one another on the wheel houses (11).

2. Two-membered articulated omnibus according to Claim 1, **characterized in that** the two wheel axles (8 and 9) are arranged in a middle length region of the rear carriage (3).

3. Two-membered articulated omnibus according to Claim 1, **characterized in that** the seat-cushion front edges of the mutually facing seats (10) in each case lie virtually vertically above that end of the floor region (12) which is adjacent to the assigned wheel house (11).

## Revendications

1. Autobus articulé à deux membres (1), dont le véhicule avant (2) présentant au moins deux essieux (6, 7) est relié via l'articulation tournante (4) au véhicule arrière (3) présentant une disposition d'essieux, dans lequel la disposition d'essieux du véhicule arrière (13) comprend deux essieux (8, 9) espacés l'un derrière l'autre, dans lequel l'autobus articulé (1) est réalisé sous forme de bus à plancher bas et équipé de sièges (10) latéraux et dans lequel les passages de roue (11) des roues d'autobus dépassant du plancher pénètrent dans l'habitacle de l'autobus articulé (1), **caractérisé en ce que** l'essieu avant (8) du véhicule arrière (3) est entraîné et pourvu d'un pneu jumelé ou d'un seul superpneu et l'essieu arrière (9) du véhicule arrière (3) est articulé, dans lequel respectivement une zone de plancher (12) se trouve entre les passages de roue latéraux (11) des deux essieux (8 et 9) du véhicule arrière (3), qui peut être utilisée comme zone de plancher commune pour des sièges disposés dans le sens opposé sur les passages de roue (11) ou des sièges double (siège en vis-à-vis 10).

2. Autobus articulé à deux membres selon la revendication 1, **caractérisé en ce que** les deux essieux (8 et 9) sont disposés dans une zone longitudinale médiane du véhicule arrière (3) ;

3. Autobus articulé à deux membres selon la revendication 1, **caractérisé en ce que** les bords avant des coussins des sièges en vis-à-vis (10) se trouvent respectivement presque à la perpendiculaire au-dessus de l'extrémité de la zone de plancher (12) adjacente au passage de roue (11) associé.
